# EUROPEAN PATENT SPECIFICATION

(11) **EP 3 940 005 B1**
(45) Date of publication and mention of the grant of the patent: **18.10.2023**
(21) Application number: 20772690.2
(22) Date of filing: 21.01.2020
(51) Int. Cl.: C08F 228/04, C09D 4/00, C09J 4/00, C08G 18/71, C08G 18/81

(54) **CURABLE RESIN COMPOSITION AND CURED PRODUCT THEREOF**
HÄRTBARE HARZZUSAMMENSETZUNG UND GEHÄRTETES PRODUKT DARAUS
COMPOSITION DE RÉSINE DURCISSABLE ET PRODUIT DURCI ASSOCIÉ

(30) Priority: 15.03.2019 JP 2019048520
(43) Date of publication of application: 19.01.2022
(73) Proprietor: Sumitomo Seika Chemicals Co., Ltd., Kako-gun, Hyogo 675-0145 (JP)
(72) Inventor: MASUHARA Yusaku, Kako-gun, Hyogo 675-0145 (JP); ASABA Takuro, Kako-gun, Hyogo 675-0145 (JP); YAMAMOTO Katsumasa, Kako-gun, Hyogo 675-0145 (JP)
(74) Representative: Nederlandsch Octrooibureau
(86) International application number: PCT/JP2020/002005
(87) International publication number: WO 2020/188993

(56) References cited:
- JP-A- H08 183 816
- JP-A- H09 111 189
- JP-A- H09 274 116
- JP-A- 2001 174 601
- JP-A- 2015 168 817
- JP-A- 2015 168 817

## Description

### Technical Field

The present invention relates to a curable resin composition and a cured product thereof.

### Background Art

In recent years, as the functionality of optical elements has increased, it has been required to increase a refractive index of various optical materials. For example, in imaging devices such as cameras, it has been required to increase a refractive index of an optical adhesive for adhering a member to a lens or for adhering lenses to each other for the purpose of improving image quality, reducing size and weight, and expanding the degree of freedom in optical design. Members having a high refractive index such as electrodes and passivation films are used in electronic devices such as organic electroluminescence devices. For the purpose of improving so-called light extraction efficiency, adhesives and encapsulants used in these electronic devices are also required to have a high refractive index. In display devices, an antireflection coating is often used to prevent reflected glare of external light, and an increase in the refractive index of the antireflection coating material is required in order to improve the antireflection performance. Further, in next-generation wearable display devices such as smart glasses, a high refractive index material is also required as an optical waveguide material.

Therefore, a variety of curable resin compositions having a higher refractive index have been studied. For example, Patent Literature 1 describes a polymerizable composition containing a compound having a thioepoxy group and a compound having a mercapto group and having a refractive index of about 1.7. Patent Literature 2 describes a composition for an optical adhesive having a refractive index of about 1.7 by using a specific vinyl sulfide compound, a methacrylic acid derivative, or the like. Patent Literature 3 discloses a curable sheet composition having a glass transition temperature of 100°C or less, a refractive index of 1.65 or higher and a haze of 2% or lower using a specific vinyl sulphide compound.

### Citation List

### Patent Literature

[Patent Literature 1] Japanese Unexamined Patent Publication No. 2003-292624
[Patent Literature 2] Japanese Unexamined Patent Publication No. H09-111189 [Patent Literature 3] Japanese Unexamined Patent Publication No. 2015-168817

### Summary of Invention

### Technical Problem

In the polymerizable composition described in Patent Literature 1, a molar ratio of thioepoxy group to mercapto group is restricted due to a polymerization reaction including a sequential reaction of thioepoxy group and mercapto group. Therefore, it could not establish various physical properties such as an elastic modulus and a glass transition temperature (Tg) of a cured product together, in addition to a refractive index.

The vinyl sulfide compound described in Patent Literature 2 can be used in combination with other radically polymerizable monomers in a certain ratio. In this case, for example, in a case where the refractive index of the cured product is set to about 1.7, it is necessary to increase the proportion of the vinyl sulfide compound in the composition in order to achieve this refractive index. However, there is a problem that the vinyl sulfide compound has a low radical polymerization activity, which may result in curing failure, and various physical properties such as the elastic modulus and the Tg of the cured product cannot be sufficiently increased even in a case where the proportion of the vinyl sulfide compound is increased.

An aspect of the present invention is to provide a curable resin composition and a cured product thereof, which are capable of producing a cured product having a high refractive index and a high elastic modulus.

### Solution to Problem

An aspect of the present invention provides a curable resin composition containing (A) a vinyl sulfide compound represented by the following general formula (1) and (B) an isocyanate compound having an isocyanate group.

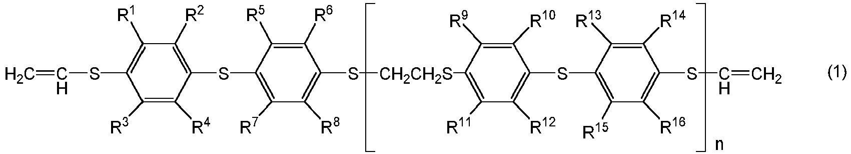

In formula (1), R¹, R², R³, R⁴, R⁵, R⁶, R⁷, R⁸, R⁹, R¹⁰, R¹¹, R¹², R¹³, R¹⁴, R¹⁵, and R¹⁶ may be the same or different from one another, and represent a hydrogen atom, a halogen atom, or an alkyl group having 1 to 6 carbon atoms, and n represents an integer of 0 to 10.

A content of (A) the vinyl sulfide compound represented by general formula (1) is preferably 50 parts by mass or more with respect to 100 parts by mass, in total content, of (A) the vinyl sulfide compound represented by general formula (1) and (B) the isocyanate compound.

The curable resin composition may further contain (C) a radically polymerizable monomer (provided that, excluding (A) the vinyl sulfide compound represented by general formula (1) and (B) the isocyanate compound).

(C) The radically polymerizable monomer is preferably a (meth)acrylic acid ester or a thio(meth)acrylic acid ester.

The content of (A) the vinyl sulfide compound represented by general formula (1) is preferably 50 parts by mass or more with respect to 100 parts by mass, in total content, of (A) the vinyl sulfide compound represented by general formula (1), (B) the isocyanate compound, and (C) the radically polymerizable monomer.

The curable resin composition may further contain (D) a radical polymerization initiator.

A cured product obtained by curing the curable resin composition preferably has a refractive index nD at 25°C of 1.65 or more at a wavelength of 589 nm.

The cured product obtained by curing the curable resin composition preferably has a yellowness YI of 12 or less. The yellowness YI is measured for a cured product having a thickness of 90 to 110 µm.

The cured product obtained by curing the curable resin composition preferably has a storage elastic modulus E' at 25°C of 1.5 GPa or more. The storage elastic modulus E' is measured by dynamic viscoelasticity measurement under conditions of a tensile mode, a temperature increase rate of 10°C/min, and a frequency of 1 Hz, for a cured product having a thickness of 90 to 110 µm.

The cured product of the curable resin composition preferably has a glass transition temperature Tg of 80°C or higher. The glass transition temperature Tg is a peak top temperature of tan δ, measured by dynamic viscoelasticity measurement under conditions of a tensile mode, a temperature increase rate of 10°C/min, and a frequency of 1 Hz, for a cured product having a thickness of 90 to 110 µm.

(B) The isocyanate compound is preferably a monofunctional isocyanate compound having one isocyanate group. The monofunctional isocyanate compound preferably has a (meth)acryloyl group.

Another aspect of the present invention provides a cured product obtained by curing the above-mentioned curable resin composition.

### Advantageous Effects of Invention

According to an aspect of the present invention, it is possible to provide a curable resin composition whichis capable of producing a cured product having a high refractive index and a high elastic modulus, and a cured product thereof. Further, according to an aspect of the present invention, it is possible to obtain a cured product having a high glass transition temperature Tg and a low yellowness. Further, the curable resin composition according to an aspect of the present invention is particularly excellent in photocurability.

### Description of Embodiments

Hereinafter, some embodiments of the present invention will be described in detail.

In the present specification, the term "(meth)acrylic" means "acrylic" and "methacrylic".

### Curable resin composition

In an embodiment, the curable resin composition according to the present invention contains (A) the vinyl sulfide compound represented by general formula (1) (hereinafter, sometimes referred to as "component (A)") and (B) the isocyanate compound having an isocyanate group (hereinafter, sometimes referred to as "component (B)").

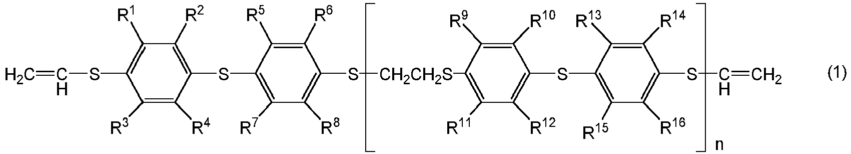

In formula (1), R¹, R², R³, R⁴, R⁵, R⁶, R⁷, R⁸, R⁹, R¹⁰, R¹¹, R¹², R¹³, R¹⁴, R¹⁵, and R¹⁶ may be the same or different from one another, and represent a hydrogen atom, a halogen atom, or an alkyl group having 1 to 6 carbon atoms, and n represents an integer of 0 to 10.

### <Component (A)>

In the component (A), the halogen atom represented by R¹, R², R³, R⁴, R⁵, R⁶, R⁷, R⁸, R⁹, R¹⁰, R¹¹, R¹², R¹³, R¹⁴, R¹⁵, and R¹⁶ (R¹ to R¹⁶) in formula (1) is preferably a chlorine atom, a bromine atom, or an iodine atom.

Examples of the alkyl group having 1 to 6 carbon atoms represented by R¹ to R¹⁶ in formula (1) include a methyl group, an ethyl group, an n-propyl group, an isopropyl group, an n-butyl group, a sec-butyl group, a tert-butyl group, an n-pentyl group, and an n-hexyl group.

In the component (A), it is preferable that R¹ to R¹⁶ in formula (1) are all hydrogen atoms. n in formula (1) is preferably 0 to 5 and more preferably 0.

Examples of the vinyl sulfide compound represented by formula (1) include bis(4-vinylthiophenyl)sulfide, bis(3-methyl-4-vinylthiophenyl)sulfide, bis(3,5-dimethyl-4-vinylthiophenyl)sulfide, bis(2,3,5,6-tetramethyl-4-vinylthiophenyl)sulfide, bis(3-hexyl-4-vinylthiophenyl)sulfide, bis(3,5-dihexyl-4-vinylthiophenyl)sulfide, bis(3-chloro-4-vinylthiophenyl)sulfide, bis(3,5-dichloro-4-vinylthiophenyl)sulfide, bis(2,3,5,6-tetrachloro-4-vinylthiophenyl)sulfide, bis(3-bromo-4-vinylthiophenyl)sulfide, bis(3,5-dibromo-4-vinylthiophenyl)sulfide, and bis(2,3,5,6-tetrabromo-4-vinylthiophenyl)sulfide. The vinyl sulfide compounds represented by formula (1) may be used alone or in a combination of two or more thereof.

The vinyl sulfide compound represented by formula (1) is preferably bis(4-vinylthiophenyl)sulfide, bis(3-methyl-4-vinylthiophenyl)sulfide, or bis(3,5-dimethyl-4-vinylthiophenyl)sulfide and more preferably bis(4-vinylthiophenyl)sulfide.

For example, in a case of bis(4-vinylthiophenyl)sulfide in which R¹ to R⁸ are all hydrogen atoms and n is 0 in formula (1), the vinyl sulfide compound represented by formula (1) can be obtained by a method of reacting 4,4'-thiobis(benzenethiol) with dihaloethane and then dehydrohalogenating the resulting product in a polar solvent such as dimethyl sulfoxide ( 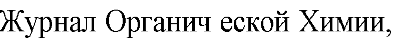 τ.28, 1905, 1992). In this method, vinyl sulfide compounds having different numerical values of n in formula (1) can be obtained by changing the reaction conditions such as the used amount and the charging method of dihaloethane. The vinyl sulfide compound represented by formula (1) can also be obtained by a method of reacting a mercaptan compound with vinyl halide in the presence of a base (Japanese Unexamined Patent Publication No. H3-287572). Further, the vinyl sulfide compound represented by formula (1) can also be obtained by a method of reacting the dihalide, which is obtained by a method of reacting a mercaptan compound with 2-halogenoethanol in the presence of an alkali metal compound and then reacting the resulting product with a halogenating agent to produce a dihalide (Japanese Unexamined Patent Publication No. 2004-51488), with an alkali metal compound aqueous solution in a heterogeneous system in the presence of a phase-transfer catalyst in an aliphatic hydrocarbon solvent (Japanese Unexamined Patent Publication No. 2003-183246).

The content of the component (A) is preferably 50 parts by mass or more and more preferably 55 parts by mass or more with respect to 100 parts by mass, in total content, of the component (A) and the component (B), from the viewpoint of sufficiently increasing the refractive index of the cured product. The content of the component (A) may be 60 parts by mass or more, 70 parts by mass or more, or 80 parts by mass or more with respect to 100 parts by mass, in total content, of the component (A) and the component (B). The content of the component (A) may be 99.95 parts by mass or less or 99.90 parts by mass or less with respect to 100 parts by mass, in total content, of the component (A) and the component (B).

The content of the component (A) may be 50 to 99.95 parts by mass, 50 to 99.90 parts by mass, 55 to 99.95 parts by mass, 55 to 99.90 parts by mass, 60 to 99.95 parts by mass, 60 to 99.90 parts by mass, 70 to 99.95 parts by mass, 70 to 99.90 parts by mass, 80 to 99.95 parts by mass, or 80 to 99.90 parts by mass with respect to 100 parts by mass, in total content, of the component (A) and the component (B).

In a case where the curable resin composition contains another radically polymerizable monomer (C) (hereinafter, sometimes referred to as "component (C)") which will be described later, the content of the component (A) is preferably 50 parts by mass or more and more preferably 55 parts by mass or more with respect to 100 parts by mass, in total content, of the component (A), the component (B), and the component (C). The content of the component (A) may be 60 parts by mass or more, 70 parts by mass or more, or 80 parts by mass or more with respect to 100 parts by mass, in total content, of the component (A), the component (B), and the component (C). The content of the component (A) may be 99.95 parts by mass or less or 99.90 parts by mass or less with respect to 100 parts by mass, in total content, of the component (A), the component (B), and the component (C).

The content of the component (A) may be 50 to 99.95 parts by mass, 50 to 99.90 parts by mass, 55 to 99.95 parts by mass, 55 to 99.90 parts by mass, 60 to 99.95 parts by mass, 60 to 99.90 parts by mass, 70 to 99.95 parts by mass, 70 to 99.90 parts by mass, 80 to 99.95 parts by mass, or 80 to 99.90 parts by mass with respect to 100 parts by mass, in total content, of the component (A), the component (B), and the component (C).

### <Component (B)>

Examples of (B) the isocyanate compound having an isocyanate group (component (B)) include monofunctional isocyanate compounds having a hydrocarbon group having 4 to 18 carbon atoms, such as n-butyl isocyanate, t-butyl isocyanate, n-hexyl isocyanate, cyclohexyl isocyanate, n-octyl isocyanate, octadecyl isocyanate, phenyl isocyanate, p-tolyl isocyanate, benzyl isocyanate, and phenethyl isocyanate; monofunctional isocyanate compounds having a (meth)acryloyl group, such as (meth)acryloyloxyethyl isocyanate, (meth)acryloyloxypropyl isocyanate, (meth)acryloyloxybutyl isocyanate, (meth)acryloyloxypentyl isocyanate, (meth)acryloyloxyhexyl isocyanate, (meth)acryloyloxyheptyl isocyanate, (meth)acryloyloxyoctyl isocyanate, (meth)acryloyloxynonyl isocyanate, (meth)acryloyloxydecyl isocyanate, (meth)acryloyloxyethoxyethyl isocyanate, and 1,1-[bis(meth)acryloyloxymethyl] ethyl isocyanate; difunctional isocyanate compounds such as hexamethylene diisocyanate, dicyclohexylmethane diisocyanate, isophorone diisocyanate, 1,3-bis(isocyanatomethyl)cyclohexane, xylylene diisocyanate, tolylene diisocyanate, diphenylmethane diisocyanate, tetramethylxylylene diisocyanate, and 2,5-diisocyanate methyl-1,4-dithiane; and trifunctional isocyanate compounds such as biurets, trimethylolpropane adducts, isocyanurates, and allophanates, which are synthesized using the difunctional isocyanate compounds as starting materials. These isocyanate compounds may be used alone or in a combination of two or more thereof.

Among the above-mentioned components (B), as (B) the isocyanate compound, a monofunctional isocyanate compound having a hydrocarbon group having 4 to 18 carbon atoms, a monofunctional isocyanate compound having a (meth)acryloyl group, and a difunctional isocyanate compound are preferable; a monofunctional isocyanate compound having a hydrocarbon group having 4 to 18 carbon atoms and a monofunctional isocyanate compound having a (meth)acryloyl group are more preferable; and a monofunctional isocyanate compound having a (meth)acryloyl group is still more preferable.

From the viewpoint of improving the curability of the curable resin composition, increasing the elastic modulus of the cured product, and increasing the Tg, the content of the component (B) is preferably 0.1 parts by mass or more and more preferably 0.2 parts by mass or more with respect to 100 parts by mass of the component (A). The content of the component (B) is preferably 7 parts by mass or less, more preferably 5 parts by mass or less, and still more preferably 4 parts by mass or less with respect to 100 parts by mass of the component (A). In a case where the content of the component (B) is 7 parts by mass or less, it is economical and it is easy to reduce the yellowness (YI) of the cured product.

From the above-mentioned viewpoint, the content of the component (B) may be 0.1 to 7 parts by mass, 0.1 to 5 parts by mass, 0.1 to 4 parts by mass, 0.2 to 7 parts by mass, 0.2 to 5 parts by mass, or 0.2 to 4 parts by mass with respect to 100 parts by mass of the component (A).

From the same viewpoint, the content of the component (B) is preferably 0.1 parts by mass or more and more preferably 0.2 parts by mass or more with respect to 100 parts by mass, in total content, of the component (A) and the component (B) (100 parts by mass, in total content, of the component (A), the component (B), and the component (C) which will be described later in a case where the component (C) is contained). The content of the component (B) is preferably 7 parts by mass or less, more preferably 5 parts by mass or less, and still more preferably 4 parts by mass or less with respect to 100 parts by mass, in total content, of the component (A) and the component (B) (100 parts by mass, in total content, of the component (A), the component (B), and the component (C) which will be described later in a case where the component (C) is contained). From the same viewpoint, the content of the component (B) may be 0.1 to 7 parts by mass, 0.1 to 5 parts by mass, 0.1 to 4 parts by mass, 0.2 to 7 parts by mass, 0.2 to 5 parts by mass, or 0.2 to 4 parts by mass with respect to 100 parts by mass, in total content, of the component (A) and the component (B) (100 parts by mass, in total content, of the component (A), the component (B), and the component (C) which will be described later in a case where the component (C) is contained).

### <Component (C)>

The curable resin composition according to the present embodiment can include (C) another radically polymerizable monomer (component (C)) in addition to the above-mentioned component (A) and component (B). By including the radically polymerizable monomer, it is possible to easily adjust the physical properties such as the refractive index, the elastic modulus, and the Tg of the cured product to desired values.

(C) The radically polymerizable monomer has one or more radically polymerizable groups. The radically polymerizable group can be a (meth)acryloyl group, a vinyl group (excluding the vinyl group contained in the (meth)acryloyl group), or a combination thereof. Examples of (C) the radically polymerizable monomer include a (meth)acrylic acid, a (meth)acrylic acid ester, a vinyl compound, a thio(meth)acrylic acid ester, and a vinyl sulfide compound other than the compound represented by formula (1).

Examples of the (meth)acrylic acid ester used as the component (C) include monofunctional (meth)acrylic acid esters such as methyl (meth)acrylate, ethyl (meth)acrylate, n-propyl (meth)acrylate, isopropyl (meth)acrylate, n-butyl (meth)acrylate, sec-butyl (meth)acrylate, tert-butyl (meth)acrylate, 2-methylbutyl (meth)acrylate, 2-ethylbutyl (meth)acrylate, 3-methylbutyl (meth)acrylate, 1,3-dimethylbutyl (meth)acrylate, pentyl (meth)acrylate, hexyl (meth)acrylate, cyclohexyl (meth)acrylate, 2-ethylhexyl (meth)acrylate, heptyl (meth)acrylate, octyl (meth)acrylate, 2-methoxyethyl acrylate, 2-ethoxyethyl acrylate, 3-ethoxypropyl acrylate, 2-ethoxybutyl acrylate, 3-ethoxybutyl acrylate, hydroxyethyl (meth)acrylate, hydroxypropyl (meth)acrylate, hydroxybutyl (meth)acrylate, phenyl (meth)acrylate, benzyl (meth)acrylate, phenylethyl (meth)acrylate, phenoxyethyl (meth)acrylate, (2-methyl-2-ethyl-1,3-dioxolan-4-yl)methyl (meth)acrylate, isobornyl (meth)acrylate, ethoxy o-phenylphenol (meth)acrylate, cyclic trimethylolpropane formal (meth)acrylate, tetrahydrofurfuryl (meth)acrylate, trifluoroethyl (meth)acrylate, (5-ethyl-1,3-dioxan-5-yl)methyl (meth)acrylate, glycidyl (meth)acrylate, 2-[2-hydroxy-5-[2-((meth)acryloyloxy)ethyl)phenyl]-2H-benzotriazole, 4-(meth)acryloyloxybenzophenone, phenylbenzyl (meth)acrylate, phenylthioethyl (meth)acrylate, o-phenylphenoxyethyl (meth)acrylate, naphthylthioethyl (meth)acrylate, and biphenylmethyl (meth)acrylate; and polyfunctional (meth)acrylic acid esters such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, polypropylene glycol di(meth)acrylate, dipropylene glycol di(meth)acrylate, tripropylene glycol di(meth)acrylate, 1,3-butanediol di(meth)acrylate, 1,4-butanediol di(meth)acrylate, 1,5-pentanediol di(meth)acrylate, 1,6-hexanediol di(meth)acrylate, ethoxylated bisphenol A di(meth)acrylate, tricyclodecanedimethanol di(meth)acrylate, 9,9-bis[4-(2-(meth)acryloyloxyethoxy)phenyl]fluorene, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, isocyanuric acid tri(meth)acrylate, ethoxylated isocyanuric acid tri(meth)acrylate, glycerin triacrylate, urethane-based (meth)acrylate, epoxy-based (meth)acrylate, polyester-based (meth)acrylate, polyether-based (meth)acrylate, and silicone-based (meth)acrylate.

In a case where the (meth)acrylic acid ester is a monofunctional (meth)acrylic acid ester, above all, preferred are methyl (meth)acrylate, ethyl (meth)acrylate, n-propyl (meth)acrylate, isopropyl (meth)acrylate, hexyl (meth)acrylate, cyclohexyl (meth)acrylate, 2-ethylhexyl (meth)acrylate, heptyl (meth)acrylate, octyl (meth)acrylate, 2-methoxyethyl acrylate, 2-ethoxyethyl acrylate, hydroxyethyl (meth)acrylate, hydroxybutyl (meth)acrylate, phenyl (meth)acrylate, benzyl (meth)acrylate, phenylethyl (meth)acrylate, phenoxyethyl (meth)acrylate, (2-methyl-2-ethyl-1,3-dioxolan-4-yl)methyl (meth)acrylate, isobornyl (meth)acrylate, ethoxy o-phenylphenol (meth)acrylate, cyclic trimethylolpropane formal (meth)acrylate, tetrahydrofurfuryl (meth)acrylate, (5-ethyl-1,3-dioxan-5-yl)methyl (meth)acrylate, glycidyl (meth)acrylate, 2-[2-hydroxy-5-[2-((meth)acryloyloxy)ethyl)phenyl]-2H-benzotriazole, phenylbenzyl (meth)acrylate, phenylthioethyl (meth)acrylate, o-phenylphenoxyethyl (meth)acrylate, naphthylthioethyl (meth)acrylate, and biphenylmethyl (meth)acrylate.

In a case where the (meth)acrylic acid ester is a polyfunctional (meth)acrylic acid ester, above all, preferred are ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, polypropylene glycol di(meth)acrylate, dipropylene glycol di(meth)acrylate, tripropylene glycol di(meth)acrylate, 1,4-butanediol di(meth)acrylate, 1,6-hexanediol di(meth)acrylate, ethoxylated bisphenol A di(meth)acrylate, tricyclodecane dimethanol di(meth)acrylate, 9,9-bis[4-(2-(meth)acryloyloxyethoxy)phenyl]fluorene, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, isocyanuric acid tri(meth)acrylate, and glycerin triacrylate.

Examples of the vinyl compound used as the component (C) include monofunctional vinyl compounds such as styrene, α-methylstyrene, 2,4-dimethylstyrene, α-ethylstyrene, α-butylstyrene, α-hexylstyrene, 4-chlorostyrene, 3-chlorostyrene, 4-bromostyrene, 4-nitrostyrene, 4-methoxystyrene, vinyltoluene, and cyclohexene; and polyfunctional vinyl compounds such as divinylbenzene, 4-vinylcyclohexene, 5-vinylbicyclo[2,2,1]hept-2-ene, diallyl diphenate, and triaryltriazine.

Above all, the vinyl compound is preferably styrene, vinyltoluene, cyclohexene, divinylbenzene, 5-vinylbicyclo[2,2,1]hept-2-ene, diallyl diphenate, or triaryltriazine and more preferably styrene or divinylbenzene.

Examples of the thio(meth)acrylic acid ester used as the component (C) include S,S'-(thiodi-p-phenylene)bis(thio(meth)acrylate), S,S'-[4,4'-thiobis(2-chlorobenzene)]bis(thio(meth)acrylate), S,S'-[4,4'-thiobis(3-chlorobenzene)]bis(thio(meth)acrylate), S,S'-[4,4'-thiobis(2,6-dichlorobenzene)]bis(thio(meth)acrylate), S,S'-[4,4'-thiobis(3,5-dichlorobenzene)]bis(thio(meth)acrylate), S,S'-[4,4'-thiobis(2-bromobenzene)]bis(thio(meth)acrylate), S,S'-[4,4'-thiobis(3-bromobenzene)]bis(thio(meth)acrylate), S,S'-[4,4'-thiobis(2,6-dibromobenzene)]bis(thio(meth)acrylate), S,S'-[4,4'-thiobis(3,5-dibromobenzene)]bis(thio(meth)acrylate), S,S'-[4,4'-thiobis(2-methylbenzene)]bis(thio(meth)acrylate), S,S'-[4,4'-thiobis(3-methylbenzene)]bis(thio(meth)acrylate), S,S'-[4,4'-thiobis(2,6-dimethylbenzene)]bis(thio(meth)acrylate), S,S'-[4,4'-thiobis(3,5-dimethylbenzene)]bis(thio(meth)acrylate), S,S'-[4,4'-thiobis(2-tert-butylbenzene)]bis(thio(meth)acrylate), S,S'-(thiodiethylene)bis(thio(meth)acrylate), S,S'-ethylenebis(thio(meth)acrylate), S,S'-[thiobis(diethylene sulfide bis(thio(meth)acrylate), S,S'-(oxydiethylene)bis(thio(meth)acrylate), phenylthio(meth)acrylate, 1,4-benzenedithio(meth)acrylate, 4-methylbenzenethio(meth)acrylate, 2-methylbenzenethio(meth)acrylate, 4,4'-di(meth)acryloylthiobiphenyl, 2-naphthalenethio(meth)acrylate, 2-pyridinethio(meth)acrylate, 4-pyridinethio(meth)acrylate, 2-thiophenethio(meth)acrylate, and 1,3,5-triazine-2,4,6-trithio(meth)acrylate.

Above all, as the thio(meth)acrylic acid ester, S,S'-(thiodi-p-phenylene)bis(thio(meth)acrylate), S,S'-[4,4'-thiobis(3,5-dibromobenzene)]bis(thio(meth)acrylate), S,S'-[4,4'-thiobis(3,5-dimethylbenzene)]bis(thio(meth)acrylate), and S,S'-(thiodiethylene)bis(thio(meth)acrylate) are preferable, and S,S'-(thiodi-p-phenylene)bis(thio(meth)acrylate) is more preferable.

Examples of vinyl sulfide compounds other than the compound represented by formula (1) used as the component (C) include methyl vinyl sulfide, ethyl vinyl sulfide, n-propyl vinyl sulfide, isobutyl vinyl sulfide, tert-butyl vinyl sulfide, n-amyl vinyl sulfide, isoamyl vinyl sulfide, cyclohexyl vinyl sulfide, 2-ethylhexyl vinyl sulfide, n-octadecyl vinyl sulfide, dodecyl vinyl sulfide, phenyl vinyl sulfide, propenyl sulfide propylene carbonate, ethylene glycol monovinyl sulfide, ethylene glycol divinyl sulfide, diethylene glycol monovinyl sulfide, diethylene glycol divinyl sulfide, triethylene glycol monovinyl sulfide, triethylene glycol divinyl sulfide, butanediol monovinyl sulfide, butanediol divinyl sulfide, hexanediol monovinyl sulfide, hexanediol divinyl sulfide, cyclohexanedimethanol monovinyl sulfide, and cyclohexanedimethanol divinyl sulfide.

Above all, the vinyl sulfide compound is preferably methyl vinyl sulfide, ethyl vinyl sulfide, n-propyl vinyl sulfide, isobutyl vinyl sulfide, tert-butyl vinyl sulfide, phenyl vinyl sulfide, ethylene glycol divinyl sulfide, diethylene glycol divinyl sulfide, triethylene glycol divinyl sulfide, butanediol divinyl sulfide, hexanediol divinyl sulfide, or cyclohexanedimethanol divinyl sulfide, and more preferably methyl vinyl sulfide, ethyl vinyl sulfide, n-propyl vinyl sulfide, phenyl vinyl sulfide, ethylene glycol divinyl sulfide, diethylene glycol divinyl sulfide, or triethylene glycol divinyl sulfide.

From the viewpoint of improving the curability of the curable resin composition, a (meth)acrylic acid ester and a thio(meth)acrylic acid ester are preferable as (C) the radically polymerizable monomer.

The content of (C) the radically polymerizable monomer is preferably 50 parts by mass or less, more preferably 45 parts by mass or less, and still more preferably 20 parts by mass or less with respect to 100 parts by mass, in total content, of the component (A), the component (B), and the component (C), from the viewpoint of sufficiently increasing the refractive index of the cured product. The content of (C) the radically polymerizable monomer is 1 part by mass or more, 3 parts by mass or more, or 5 parts by mass or more with respect to 100 parts by mass, in total content, of the component (A), the component (B), and the component (C).

### <Component (D)>

The curable resin composition according to the present embodiment can include (D) a radical polymerization initiator, for the purpose of advancing curing by a radical polymerization reaction. The radical polymerization initiator can be a photoradical polymerization initiator, a thermal radical polymerization initiator, or a combination thereof.

Examples of the photoradical polymerization initiator used as the component (D) include benzoin compounds such as benzoin, benzoin methyl ether, benzoin ethyl ether, and benzoin isopropyl ether, and alkyl ether compounds thereof; alkylphenone compounds such as 2,2-dimethoxy-2-phenylacetophenone, 1-hydroxycyclohexylphenylketone, 2-hydroxy-2-methylpropiophenone, 2-hydroxy-4'-(2-hydroxyethoxy)-2-methylpropiophenone, 1,1'-(methylene-di-4,1-phenylene)bis[2-hydroxy-2-methyl-1-propanone] 2-methyl-4'-(methylthio)-2-morpholinopropiophenone, and 2-benzyl-2-(dimethylamino)-4'-morpholinobutyrophenone; acylphosphine oxide compounds such as 2,4,6-trimethylbenzoyl-diphenylphosphine oxide, and bis(2,4,6-trimethylbenzoyl)phenylphosphine oxide; intramolecular hydrogen abstraction type compounds such as methyl benzoylformate; and oxime ester compounds such as 1-[4-(phenylthio)phenyl]octane-1,2-dione=2-(o-benzoyloxime) and 1-[9-ethyl-6-(2-methylbenzoyl)-9H-carbazol-3-yl]ethanone=1-(o-acetyloxime). The photoradical polymerization initiators may be used alone or in a combination of two or more thereof.

Above all, an alkylphenone compound and an acylphosphine oxide compound are preferable as the photoradical polymerization initiator.

The content of the photoradical polymerization initiator is preferably 0.1 parts by mass or more and more preferably 0.5 parts by mass or more with respect to 100 parts by mass, in total content, of the component (A), the component (B), and the component (C) contained as necessary, from the viewpoint of sufficiently advancing the curing. Further, from the viewpoint of suppressing an increase in the yellowness of the cured product, the content of the photoradical polymerization initiator is preferably 7 parts by mass or less, more preferably 5 parts by mass or less, and still more preferably 4 parts by mass or less.

Examples of the thermal radical polymerization initiator used as the component (D) include azobisisobutyronitrile, benzoylperoxide, tert-butylperoxypivalate, tert-butylperoxyneohexanoate, tert-hexylperoxyneohexanoate, tert-butylperoxyneodecanoate, tert-hexylperoxyneodecanoate, cumylperoxyneohexanoate, cumylperoxyneodecanoate, and 1,1,3,3,-tetramethylbutylperoxy 2-ethylhexanoate. The thermal radical polymerization initiators may be used alone or in a combination of two or more thereof.

The content of the thermal radical polymerization initiator is preferably 0.05 parts by mass or more and more preferably 0.1 parts by mass or more with respect to 100 parts by mass, in total content, of the component (A) and the component (B) (or 100 parts by mass, in total content, of the component (A), the component (B), and the component (C)), from the viewpoint of sufficiently advancing the curing. Further, the content of the thermal radical polymerization initiator is preferably 10 parts by mass or less and more preferably 5 parts by mass or less with respect to 100 parts by mass, in total content, of the component (A) and the component (B) (or 100 parts by mass, in total content, of the component (A), the component (B), and the component (C)), from the viewpoint of suppressing an increase in the yellowness of the cured product.

(D) The radical polymerization initiator is preferably a photoradical polymerization initiator from the viewpoint of productivity of the cured product.

The curable resin composition according to the present embodiment may further contain other components, if necessary. Examples thereof include additives such as an organic solvent, a polymerization inhibitor, an antioxidant, a light stabilizer, a plasticizer, a leveling agent, a defoaming agent, a UV absorber, a coupling agent, a sensitizer, a metal deactivator, a chain transfer agent, an anti-blocking agent, a photocationic polymerization initiator, a thermal cationic polymerization initiator, an inorganic fine particle, and a mold release agent. The content of these additives can be appropriately set as long as the effects in the present invention are not impaired. The content of the additive is usually preferably 30 parts by mass or less, 20 parts by mass or less, or 10 parts by mass or less and may be, for example, 0.001 parts by mass or more with respect to 100 parts by mass, in total content, of the component (A) and the component (B) (or 100 parts by mass, in total content, of the component (A), the component (B), and the component (C)) in the curable resin composition.

The curable resin composition according to the present embodiment can be produced by a method of mixing and stirring the component (A), the component (B), and the component (C) and the component (D) contained as necessary. These components may be mixed at the same time or sequentially. The temperature of the curable resin composition at the time of stirring is not particularly limited, but is usually 0°C to 100°C and preferably 10°C to 80°C. The stirring time is preferably 1 minute to 24 hours and more preferably 1 minute to 6 hours. The temperature and stirring time during stirring are appropriately adjusted depending on the type of polymerization initiator.

### Cured product

A cured product having a certain shape can be produced by using the curable resin composition according to the present embodiment. The cured product can be produced, for example, by filling a mold having a certain shape with a curable resin composition, curing the filled composition by advancing polymerization (for example, radical polymerization) in the mold, and releasing a cured product from the mold. Further, the curable resin composition can be applied onto a certain base material and cured by advancing polymerization (for example, radical polymerization) to produce a cured product in the form of a thin film arranged on the base material.

The curable resin composition may be degassed and defoamed before the mold is filled with the curable resin composition or the curable resin composition is applied onto the base material. This makes it possible to remove dissolved oxygen and air bubbles in the curable resin composition, whereby the polymerization can proceed efficiently and air bubbles can be prevented from being mixed into the obtained cured product. The method for degassing and defoaming the curable resin composition is not particularly limited, and for example, bubbling with an inert gas such as nitrogen or argon, vacuum decompression degassing, ultrasonic degassing, hollow fiber membrane degassing, or a combination thereof can be adopted.

In an embodiment, the curing (for example, radical polymerization) of the curable resin composition in the present invention can be carried out by photocuring (photoradical polymerization), thermal curing (thermal radical polymerization), or a combination thereof.

In a case where the curing of the curable resin composition is photocuring, for example, the curable resin composition filled in the mold is irradiated with light such as ultraviolet light or visible light. The light is preferably ultraviolet light (UV) because of capable of achieving efficient curing.

Examples of light sources used for photopolymerization include a low-pressure mercury lamp, a high-pressure mercury lamp, an ultrahigh-pressure mercury lamp, a metal halide lamp, a deuterium lamp, an argon lamp, a xenon lamp, an LED, a halogen lamp, an excimer laser, and a helium-cadmium laser. Among them, a high-pressure mercury lamp, a metal halide lamp, a xenon lamp, and an LED are preferable, and a high-pressure mercury lamp and an LED are more preferable.

The intensity of the UV for irradiation is preferably 5 to 1000 mW/cm², more preferably 10 to 700 mW/cm², and still more preferably 20 to 500 mW/cm² as a value measured using UVM-100 (λ = 300 to 450 nm, manufactured by Aitec System Co., Ltd.) as a UV integral light counter. In a case where the UV intensity is 5 mW/cm² or more, curing defects can be suppressed, and the refractive index, the elastic modulus, and the Tg can be sufficiently increased. In a case where the UV intensity is 1000 mW/cm² or less, coloring of the cured product can be suppressed.

The UV irradiation time is usually 5 seconds to 20 minutes, preferably 10 seconds to 15 minutes, and more preferably 15 seconds to 10 minutes. In a case where the UV irradiation time is 5 seconds or more, curing defects can be suppressed, and the refractive index, the elastic modulus, and the Tg can be sufficiently increased. In a case where the UV irradiation time is 20 minutes or less, coloring of the cured product can be suppressed.

The integrated light quantity (J/cm²) of UV is a value obtained by dividing the product (mJ/cm²) of the UV intensity (mW/cm²) and the UV irradiation time (seconds) by 1000. The integrated light quantity of UV is preferably 0.1 to 100 J/cm² and more preferably 1 to 50 J/cm². In a case where the integrated light quantity of UV is 0.1 J/cm² or more, curing defects can be suppressed, and the refractive index, the elastic modulus, and the Tg can be sufficiently increased. In a case where the integrated light quantity of UV is 100 J/cm² or less, coloring of the cured product can be suppressed.

In a case where the curing of the curable resin composition is thermal curing, for example, a cured product can be obtained by heating the curable resin composition filled in the mold at a predetermined temperature for a predetermined time. The heating temperature for thermal curing is usually 0°C to 200°C and preferably 20°C to 180°C. The heating time for thermal curing is preferably 30 seconds to 24 hours and more preferably 1 minute to 12 hours.

The thickness of the cured product obtained by curing the curable resin composition according to the present embodiment can be appropriately set as desired. The thickness of the cured product is usually 0.1 to 10 mm and preferably 1 µm to 5 mm.

The refractive index nD at 25°C at a wavelength of 589 nm of the cured product obtained by curing the curable resin composition according to the present embodiment is preferably 1.65 or more, more preferably 1.66 or more, still more preferably 1.67 or more, and particularly preferably 1.68 or more. By setting the refractive index within the above range, in a case where the cured product is used as a material for an optical lens, an optical adhesive material, an optical encapsulant, a coating agent, an optical waveguide, or the like, the performance thereof can be improved. In the present specification, the refractive index nD refers to a refractive index of the cured product having a thickness of 90 to 110 µm, measured at 25°C using a 589 nm interference filter with a multi-wavelength Abbe refractometer (for example, Model No.: DR-M4, manufactured by Atago Co., Ltd.).

The yellowness YI of the cured product obtained by curing the curable resin composition according to the present embodiment is preferably 12 or less, more preferably 8 or less, and still more preferably 7 or less. In a case where the YI is 12 or less, it is possible to suppress a decrease in brightness and a decrease in color purity of the entire optical system in a case where the cured product is used as a material for an optical lens, an optical adhesive material, an optical encapsulant, a coating agent, an optical waveguide, or the like. The lower limit of the YI is not particularly limited, but is ideally 0. In the present specification, the yellowness YI refers to YI as measured in a color mode with a spectrophotometer (for example, Model No.: UH-4150, manufactured by Hitachi, Ltd.) for the cured product having a thickness of 90 to 110 µm.

The storage elastic modulus E' at 25°C of the cured product obtained by curing the curable resin composition according to the present embodiment is preferably 1.5 GPa or more and more preferably 1.6 GPa or more. In a case where the E' is 1.5 GPa or more, the mechanical strength of the cured product is sufficient, and therefore in a case where the cured product is used as a material for an optical lens, an optical adhesive material, an optical encapsulant, a coating agent, an optical waveguide, or the like, excellent reliability can be obtained. The upper limit of the E' is not particularly limited, but is usually 5 GPa. In the present specification, the storage elastic modulus E' refers to a storage elastic modulus E' at 25°C as measured by dynamic viscoelasticity measurement under conditions of a tensile mode, a temperature increase rate of 10°C/min, and a frequency of 1 Hz, for a cured product having a thickness of 90 to 110 µm, using a dynamic viscoelasticity measuring device (for example, Model No.: RSA-G2, manufactured by TA Instruments Japan Inc.).

The glass transition temperature Tg of the cured product obtained by curing the curable resin composition according to the present embodiment is preferably 80°C or higher, more preferably 85°C or higher, and still more preferably 90°C or higher. In a case where the Tg is 80°C or higher, heat resistance becomes sufficient and therefore deformation is less likely to occur in a high temperature range. That is, in a case where the cured product is used as a material for an optical lens, an optical adhesive material, an optical encapsulant, a coating agent, an optical waveguide, or the like, the reliability in a high temperature environment becomes excellent. The upper limit of the Tg is not particularly limited, but is usually 300°C. However, the cured product may not show the Tg. In the present specification, the glass transition temperature Tg refers to a peak top temperature of tan δ as measured by dynamic viscoelasticity measurement under conditions of a tensile mode, a temperature increase rate of 10°C/min, and a frequency of 1 Hz, for the cured product having a thickness of 90 to 110 µm, using a dynamic viscoelasticity measuring device (for example, Model No.: RSA-G2, manufactured by TA Instruments Japan Inc.).

A molded body of the cured product obtained by curing the curable resin composition according to the present embodiment exhibits a balanced value of the refractive index, the elastic modulus, the Tg, and the yellowness, and therefore can be suitably used as a material for an optical lens, an optical adhesive material, an optical encapsulant, a coating agent, or an optical waveguide. Specifically, the molded body can be used as a material for an imaging optical system such as an optical lens, for example, a camera lens for an optical device, an in-vehicle camera lens, a camera lens for a smartphone, or a lens for a digital camera. The curable resin composition can be used as an optical adhesive for bonding of a portion through which light passes, or bonding of an optical path such as bonding between optical fibers or between an optical fiber and an optical waveguide in an optimum optical bonding state.

### Examples

Hereinafter, the present invention will be described in more detail with reference to Examples and Comparative Examples. However, the present invention is not limited to the following examples.

### 1. Preparation of raw material

### [Production Example 1]

### <Component (A): Production of bis(4-vinylthiophenyl)sulfide (Compound A)>

250.4 g (1.0 mol) of 4,4'-thiobis(benzenethiol) and 480.0 g (2.0 mol) of a 17 mass% sodium hydroxide aqueous solution were charged into a 2 L four-necked flask equipped with a stirrer, a dropping funnel and a thermometer, and stirred at 60°C for 1 hour. Then, 169.1 g (2.1 mol) of 2-chloroethanol was added dropwise thereto at 60°C over 1.5 hours, and after completion of the dropwise addition, the reaction was carried out at 60°C for 1.5 hours. After completion of the reaction, the reaction solution was cooled to 20°C. The precipitated crystals were separated by filtration and washed twice with 400 g of water to obtain 492.5 g of a wet cake of bis[4-(2-hydroxyethylthio)phenyl]sulfide.

492.5 g of the obtained wet cake of bis[4-(2-hydroxyethylthio)phenyl] sulfide and 1500 g of toluene were charged into a 3 L four-necked flask equipped with a stirrer, a dropping funnel, and a thermometer, and water was distilled off from this mixed solution by heating at 110°C. During the distillation, the toluene distilled by azeotropy with water was separated from water and returned to the flask. Then, the mixed solution after distillation was cooled to 70°C. 249.9 g (2.1 mol) of thionyl chloride was added dropwise to the cooled mixed solution at 70°C over 2 hours, and after completion of the dropwise addition, the reaction was carried out at 70°C for 2 hours. After completion of the reaction, 600 g (1.5 mol) of a 10 mass% sodium hydroxide aqueous solution was added to the obtained reaction solution which was then subjected to liquid separation at 70°C. The organic layer obtained by the liquid separation was cooled to 10°C, and the precipitated crystals were filtered, washed with 600 g of n-heptane, and then dried at 50°C under reduced pressure to obtain 348.0 g (0.93 mol) of bis[4-(2-chloroethylthio)phenyl] sulfide.

Next, 348.0 g (0.93 mol) of bis[4-(2-chloroethylthio)phenyl]sulfide, 780 g of n-heptane, 14.9 g (0.046 mol) of tetrabutyl ammonium bromide, and 232.5 g (2.8 mol) of a 48 mass% sodium hydroxide aqueous solution were charged into a 3 L four-necked flask equipped with a stirrer and a thermometer, and the reaction was carried out at 75°C to 85°C for 5.5 hours. After completion of the reaction, 428 g of water was added to the reaction solution in the flask, and the formed mixed solution was subjected to liquid separation at 60°C. The organic layer obtained by the liquid separation was further washed twice with 372 g of water to obtain 1050 g of an n-heptane solution of bis(4-vinylthiophenyl)sulfide.

1.4 g of 2,6-di-tert-butyl-4-methylphenol was added to the obtained n-heptane solution, and n-heptane was distilled off under conditions of 0.6 kPa and 40°C to obtain 275.3 g (0.91 mol) of bis(4-vinylthiophenyl)sulfide. The HPLC purity of the obtained bis(4-vinylthiophenyl)sulfide was 99.3%. The yield with respect to 4,4'-thiobis(benzenethiol) was 91%.

The compounds shown below were used as the component (B), the component (C), and the component (D).

### <Component (B)>

Compound B-1: acryloyloxyethyl isocyanate (KARENZ AOI, manufactured by Showa Denko K.K.)
Compound B-2: n-butyl isocyanate (manufactured by Tokyo Chemical Industry Co., Ltd.)
Compound B-3: xylylene diisocyanate (manufactured by Tokyo Chemical Industry Co., Ltd.)
Compound B-4: cyclohexyl isocyanate (manufactured by Tokyo Chemical Industry Co., Ltd.)

### <Component (C)>

Compound C-1: VISCOAT 200 (5-ethyl-1,3-dioxan-5-yl)methyl acrylate, manufactured by Osaka Organic Chemical Industry Ltd.)
Compound C-2: BPE-80N (ethoxylated bisphenol A dimethacrylate, manufactured by Shin-Nakamura Chemical Co., Ltd.)
Compound C-3: A-TMPT (trimethylolpropane triacrylate, manufactured by Shin-Nakamura Chemical Co., Ltd.)
Compound C-4: LIGHT ACRYLATE 3EG-A (triethylene glycol diacrylate, manufactured by Kyoeisha Chemical Co., Ltd.)

### <Component (D)>

Compound D-1: Omnirad 1173 (2-hydroxy-2-methylpropiophenone, manufactured by IGM Resins B.V.)
Compound D-2: Omnirad 819 (bis(2,4,6-trimethylbenzoyl)phenylphosphine oxide, manufactured by IGM Resins B.V.)
Compound D-3: PEROCTA O (1,1,3,3,-tetramethylbutylperoxy 2-ethylhexanoate, manufactured by NOF CORPORATION)

### 2. Preparation of curable resin composition and cured product thereof

### (Example 1)

Compound A, Compound B-1, and Compound D-1 were mixed at the mass ratios shown in Table 1 and the mixture was stirred at 25°C for 30 minutes. The obtained mixture was degassed under vacuum decompression at 25°C for 10 minutes to obtain a curable resin composition. Next, the gap of a glass mold, which was configured such that two glass plates (Model No.: S9224, manufactured by Matsunami Glass Ind., Ltd.) having a thickness of 1.2 mm and having a size of 76 × 52 mm square were arranged to face each other in order to have a gap of 100 µm, was filled with the curable resin composition. The curable resin composition filled in the glass mold was irradiated with light (UV) from one glass surface side under the conditions shown in Table 1 using an LED lamp (wavelength: 365 nm) to cure the curable resin composition. The cured product was released from the glass mold to obtain a molded body for evaluation having a thickness of about 100 µm.

### (Examples 2 to 17 and Comparative Examples 1 and 2)

Curable resin compositions were prepared in the same manner as in Example 1, except that individual raw materials were used in the mass ratios shown in Table 1, and then cured to produce molded bodies for evaluation of the cured products.

### (Example 18)

Compound A, Compound B-1, and Compound D-3 were mixed at the mass ratios shown in Table 1 and the mixture was stirred at 25°C for 30 minutes. The obtained mixture was degassed under vacuum decompression at 25°C for 10 minutes to obtain a curable resin composition. Next, the gap of a glass mold, which was configured such that two glass plates (Model No.: S9224, manufactured by Matsunami Glass Ind., Ltd.) having a thickness of 1.2 mm and having a size of 76 × 52 mm square were arranged to face each other in order to have a gap of 100 µm, was filled with the curable resin composition. The glass mold filled with the curable resin composition was heated at 65°C for 2 hours, followed by a temperature rise of from 65°C to 100°C over 1 hour, and then heated at 100°C for 2 hours to cure the curable composition. The cured product was released from the glass mold to obtain a molded body for evaluation having a thickness of about 100 µm.

### 3. Evaluation of cured product (molded body for evaluation)

The following physical properties were evaluated using the molded body for evaluation. The results are shown in 1.

### <Thickness>

The thickness of the obtained molded body for evaluation was measured using a micrometer (Model No.: MDC-25MX, manufactured by Mitutoyo Corporation).

### <Refractive index nD>

With respect to the obtained molded body for evaluation, the refractive index nD at 25°C was measured using a 589 nm interference filter with a multi-wavelength Abbe refractometer (Model No.: DR-M4, manufactured by Atago Co., Ltd.). In a case where the refractive index is 1.650 or more, it can be said that the refractive index is high.

### <Storage elastic modulus E' and glass transition temperature Tg>

The temperature-dependent change of the dynamic viscoelasticity of the molded body for evaluation was measured under conditions of a tensile mode, a temperature increase rate of 10°C/min, and a frequency of 1 Hz, using a dynamic viscoelasticity measuring device (Model No.: RSA-G2, manufactured by TA Instruments Japan Inc.), and the storage elastic modulus E' at 25°C was read. In addition, the temperature of the peak top of tan δ was recorded as the glass transition temperature Tg.

### <Yellowness YI>

The obtained molded body for evaluation was measured in a color mode with a spectrophotometer (Model No.: UH-4150, manufactured by Hitachi, Ltd.), and the yellowness YI was recorded.

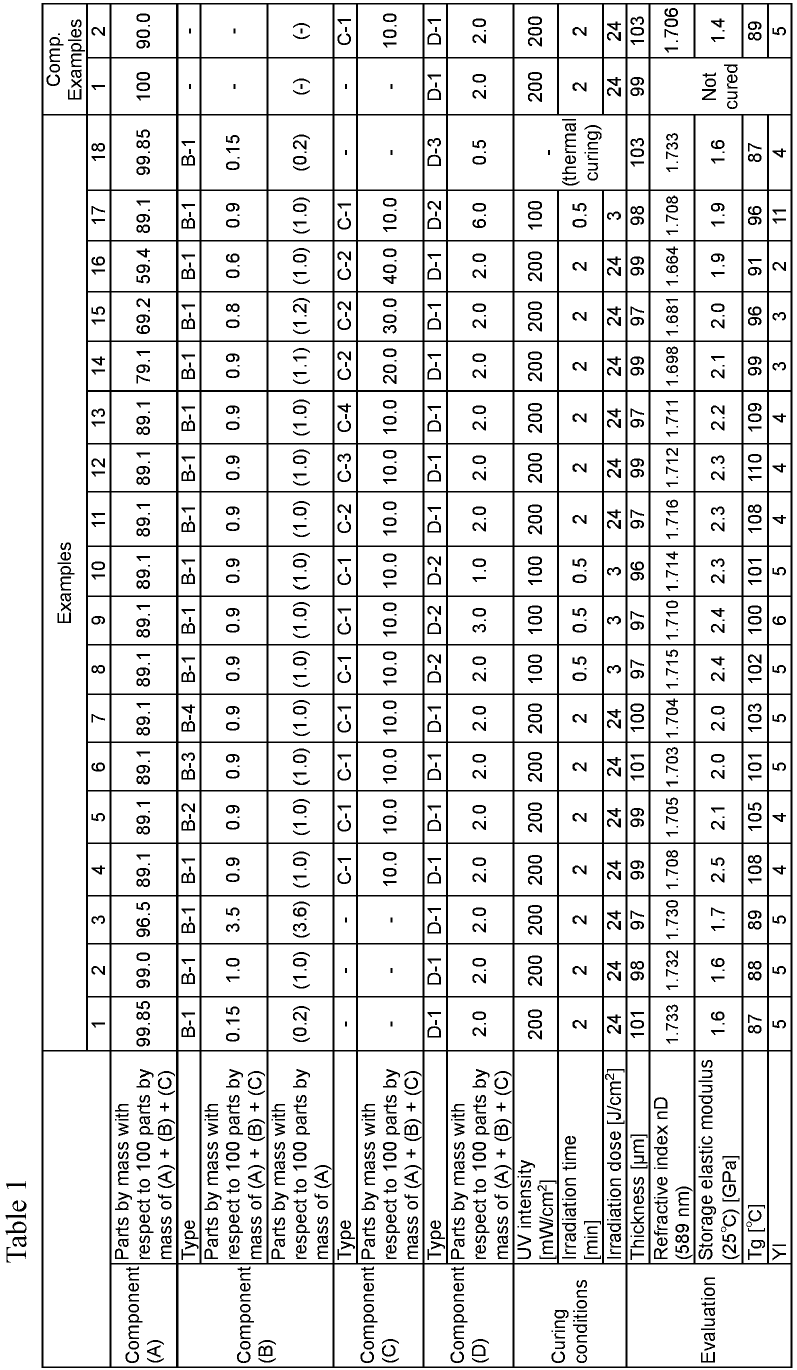

## Claims

1. A curable resin composition, comprising:
(A) a vinyl sulfide compound represented by the following general formula (1); and
(B) an isocyanate compound having an isocyanate group: 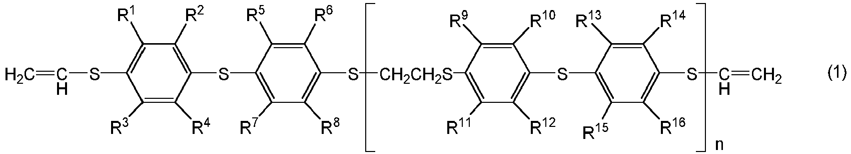 in formula (1), R¹, R², R³, R⁴, R⁵, R⁶, R⁷, R⁸, R⁹, R¹⁰, R¹¹, R¹², R¹³, R¹⁴, R¹⁵, and R¹⁶ may be the same or different from one another, and represent a hydrogen atom, a halogen atom, or an alkyl group having 1 to 6 carbon atoms, and n represents an integer of 0 to 10.

2. The curable resin composition according to claim 1, wherein a content of (A) the vinyl sulfide compound represented by general formula (1) is 50 parts by mass or more with respect to 100 parts by mass, in total content, of (A) the vinyl sulfide compound represented by general formula (1) and (B) the isocyanate compound.

3. The curable resin composition according to claim 1 or 2, further comprising:
(C) a radically polymerizable monomer (provided that, excluding (A) the vinyl sulfide compound represented by general formula (1) and (B) the isocyanate compound).

4. The curable resin composition according to claim 3, wherein (C) the radically polymerizable monomer is a (meth)acrylic acid ester or a thio(meth)acrylic acid ester.

5. The curable resin composition according to claim 3 or 4, wherein a content of (A) the vinyl sulfide compound represented by general formula (1) is 50 parts by mass or more with respect to 100 parts by mass, in total content, of (A) the vinyl sulfide compound represented by general formula (1), (B) the isocyanate compound, and (C) the radically polymerizable monomer.

6. The curable resin composition according to any one of claims 1 to 5, further comprising:
(D) a radical polymerization initiator.

7. The curable resin composition according to any one of claims 1 to 6, wherein a cured product obtained by curing the curable resin composition has a refractive index nD at 25°C of 1.65 or more at a wavelength of 589 nm.

8. The curable resin composition according to any one of claims 1 to 7, wherein a cured product obtained by curing the curable resin composition has a yellowness YI of 12 or less, and
the yellowness YI is measured for the cured product having a thickness of 90 to 110 µm by the method mentioned in the specification.

9. The curable resin composition according to any one of claims 1 to 8, wherein a cured product obtained by curing the curable resin composition has a storage elastic modulus E' at 25°C of 1.5 GPa or more, and
the storage elastic modulus E' is measured by dynamic viscoelasticity measurement under conditions of a tensile mode, a temperature increase rate of 10°C/min, and a frequency of 1 Hz, for the cured product having a thickness of 90 to 110 µm.

10. The curable resin composition according to any one of claims 1 to 9, wherein the cured product of the curable resin composition has a glass transition temperature Tg of 80°C or higher, and
the glass transition temperature Tg is a peak top temperature of tan δ, measured by dynamic viscoelasticity measurement under conditions of a tensile mode, a temperature increase rate of 10°C/min, and a frequency of 1 Hz, for the cured product having a thickness of 90 to 110 µm.

11. The curable resin composition according to any one of claims 1 to 10, wherein (B) the isocyanate compound is a monofunctional isocyanate compound having one isocyanate group.

12. The curable resin composition according to claim 11, wherein the monofunctional isocyanate compound has a (meth)acryloyl group.

13. A cured product obtained by curing the curable resin composition according to any one of claims 1 to 12.

## Patentansprüche

1. Härtbare Harzzusammensetzung, umfassend:
(A) eine Vinylsulfidverbindung, die durch die folgende allgemeine Formel (1) dargestellt wird; und
(B) eine Isocyanatverbindung mit einer Isocyanatgruppe: 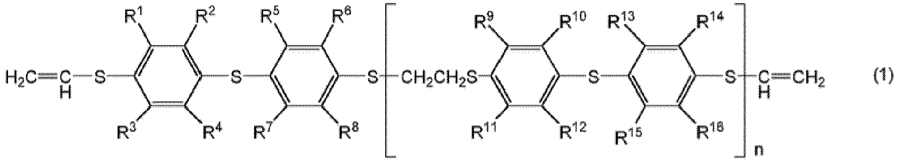
wobei in Formel (1) R¹, R², R³, R⁴, R⁵, R⁶, R⁷, R⁸, R⁹, R¹⁰, R¹¹, R¹², R¹³, R¹⁴, R¹⁵, und R¹⁶ gleich oder voneinander verschieden sein können und ein Wasserstoffatom, ein Halogenatom oder eine Alkylgruppe mit 1 bis 6 Kohlenstoffatomen darstellen, und n eine ganze Zahl von 0 bis 10 darstellt.

2. Härtbare Harzzusammensetzung nach Anspruch 1, wobei ein Gehalt an (A) der durch die allgemeine Formel (1) dargestellten Vinylsulfidverbindung 50 Masseteile oder mehr beträgt, bezogen auf 100 Masseteile des Gesamtgehalts von (A) der durch die allgemeine Formel (1) dargestellten Vinylsulfidverbindung und (B) der Isocyanatverbindung.

3. Härtbare Harzzusammensetzung nach Anspruch 1 oder 2, weiter umfassend:
(C) ein radikalisch polymerisierbares Monomer (mit der Maßgabe, dass (A) die durch die allgemeine Formel (1) dargestellte Vinylsulfidverbindung und (B) die Isocyanatverbindung ausgeschlossen sind).

4. Härtbare Harzzusammensetzung nach Anspruch 3, wobei (C) das radikalisch polymerisierbare Monomer ein (Meth)acrylsäureester oder ein Thio(meth)acrylsäureester ist.

5. Härtbare Harzzusammensetzung nach Anspruch 3 oder 4, wobei ein Gehalt an (A) der durch die allgemeine Formel (1) dargestellten Vinylsulfidverbindung 50 Masseteile oder mehr beträgt, bezogen auf 100 Masseteile des Gesamtgehalts von (A) der durch die allgemeine Formel (1) dargestellten Vinylsulfidverbindung, (B) der Isocyanatverbindung und (C) des radikalisch polymerisierbaren Monomers.

6. Härtbare Harzzusammensetzung nach einem der Ansprüche 1 bis 5, weiter umfassend:
(D) einen radikalischen Polymerisationsinitiator.

7. Härtbare Harzzusammensetzung nach einem der Ansprüche 1 bis 6,
wobei ein gehärtetes Produkt, das durch Härten der härtbaren Harzzusammensetzung erhalten wird, einen Brechungsindex nD bei 25 °C von 1,65 oder mehr bei einer Wellenlänge von 589 nm aufweist.

8. Härtbare Harzzusammensetzung nach einem der Ansprüche 1 bis 7, wobei ein gehärtetes Produkt, das durch Härten der härtbaren Harzzusammensetzung erhalten wird, einen Gelbwert Yl von 12 oder weniger aufweist, und
der Gelbwert Yl für das gehärtete Produkt mit einer Dicke von 90 bis 110 µm nach dem in der Beschreibung genannten Verfahren gemessen wird.

9. Härtbare Harzzusammensetzung nach einem der Ansprüche 1 bis 8, wobei ein gehärtetes Produkt, das durch Härten der härtbaren Harzzusammensetzung erhalten wird, einen Speicherelastizitätsmodul E' bei 25 °C von 1.5 GPa oder mehr aufweist, und
der Speicherelastizitätsmodul E' durch dynamische Viskoelastizitätsmessung unter den Bedingungen eines Zugmodus, einer Temperaturanstiegsrate von 10°C/min und einer Frequenz von 1 Hz für das gehärtete Produkt mit einer Dicke von 90 bis 110 µm gemessen wird.

10. Härtbare Harzzusammensetzung nach einem der Ansprüche 1 bis 9, wobei das gehärtete Produkt der härtbaren Harzzusammensetzung eine Glasübergangstemperatur Tg von 80 °C oder höher aufweist, und
die Glasübergangstemperatur Tg eine Spitzenwerttemperatur von tan δ ist, gemessen durch dynamische Viskoelastizitätsmessung unter den Bedingungen eines Zugmodus, einer Temperaturanstiegsrate von 10°C/min und einer Frequenz von 1 Hz, für das gehärtete Produkt mit einer Dicke von 90 bis 110 µm.

11. Härtbare Harzzusammensetzung nach einem der Ansprüche 1 bis 10, wobei (B) die Isocyanatverbindung eine monofunktionelle Isocyanatverbindung mit einer Isocyanatgruppe ist.

12. Härtbare Harzzusammensetzung nach Anspruch 11, wobei die monofunktionelle Isocyanatverbindung eine (Meth)acryloylgruppe aufweist.

13. Gehärtetes Produkt, erhalten durch Härten der härtbaren Harzzusammensetzung nach einem der Ansprüche 1 bis 12.

## Revendications

1. Composition de résine durcissable, comprenant :
(A) un composé sulfure de vinyle représenté par la formule générale (1) suivante ; et
(B) un composé isocyanate ayant un groupe isocyanate : 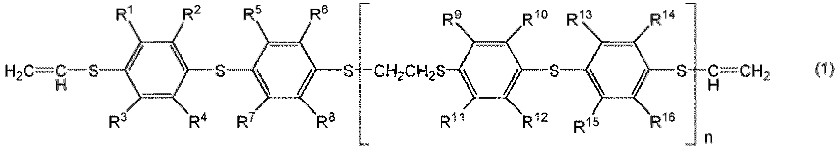
dans la formule (1), R¹, R², R³, R⁴, R⁵, R⁶, R⁷, R⁸, R⁹, R¹⁰, R¹¹, R¹², R¹³, R¹⁴, R¹⁵ et R¹⁶ peuvent être identiques ou différents les uns des autres, et représentent un atome d'hydrogène, un atome d'halogène ou un groupe alkyle présentant 1 à 6 atomes de carbone, et n représente un entier de 0 à 10.

2. Composition de résine durcissable selon la revendication 1, dans laquelle une teneur du composé de sulfure de vinyle (A) représenté par la formule générale (1) est de 50 parties en masse ou plus par rapport à 100 parties en masse, en teneur totale, du composé de sulfure de vinyle (A) représenté par la formule générale (1) et du composé isocyanate (B).

3. Composition de résine durcissable selon la revendication 1 ou 2, comprenant en outre :
(C) un monomère polymérisable par voie radicalaire (à condition que, à l'exclusion du composé de sulfure de vinyle (A) représenté par la formule générale (1) et du composé isocyanate (B)).

4. Composition de résine durcissable selon la revendication 3, dans laquelle le monomère polymérisable par voie radicalaire (C) est un ester d'acide (méth)acrylique ou un ester d'acide thio(méth)acrylique.

5. Composition de résine durcissable selon la revendication 3 ou 4, dans laquelle une teneur du composé de sulfure de vinyle (A) représenté par la formule générale (1) est de 50 parties en masse ou plus par rapport à 100 parties en masse, en teneur totale, du composé de sulfure de vinyle (A) représenté par la formule générale (1), du composé isocyanate (B), et du monomère polymérisable par voie radicalaire (C).

6. Composition de résine durcissable selon l'une quelconque des revendications 1 à 5, comprenant en outre :
(D) un initiateur de polymérisation radicalaire.

7. Composition de résine durcissable selon l'une quelconque des revendications 1 à 6, dans laquelle un produit durci obtenu par durcissement de la composition de résine durcissable présente un indice de réfraction nD à 25°C de 1.65 ou plus à une longueur d'onde de 589 nm.

8. Composition de résine durcissable selon l'une quelconque des revendications 1 à 7, dans laquelle un produit durci obtenu par durcissement de la composition de résine durcissable présente un jaunissement YI de 12 ou moins, et
le jaunissement YI est mesuré pour le produit durci présentant une épaisseur de 90 à 110 µm par le procédé mentionné dans la description.

9. Composition de résine durcissable selon l'une quelconque des revendications 1 à 8, dans laquelle un produit durci obtenu par durcissement de la composition de résine durcissable présente un module d'élasticité au stockage E' à 25°C de 1,5 GPa ou plus, et
le module d'élasticité au stockage E' est mesuré par mesure de viscoélasticité dynamique dans des conditions d'un mode de traction, d'une vitesse d'augmentation de température de 10°C/min et d'une fréquence de 1 Hz, pour le produit durci présentant une épaisseur de 90 à 110 µm.

10. Composition de résine durcissable selon l'une quelconque des revendications 1 à 9, dans laquelle le produit durci de la composition de résine durcissable présente une température de transition vitreuse Tg de 80°C ou plus, et
la température de transition vitreuse Tg est une température maximale de tan δ, mesurée par une mesure de viscoélasticité dynamique dans des conditions d'un mode de traction, d'une vitesse d'augmentation de température de 10°C/min et d'une fréquence de 1 Hz, pour le produit durci présentant une épaisseur de 90 à 110 µm.

11. Composition de résine durcissable selon l'une quelconque des revendications 1 à 10, dans laquelle le composé isocyanate (B) est un composé isocyanate monofonctionnel présentant un groupe isocyanate.

12. Composition de résine durcissable selon la revendication 11, dans laquelle le composé isocyanate monofonctionnel présente un groupe (méth)acryloyle.

13. Produit durci obtenu par durcissement de la composition de résine durcissable selon l'une quelconque des revendications 1 à 12.
